# NEUE EUROPÄISCHE PATENTSCHRIFT

(11) **EP 2 038 189 B2**
(45) Veröffentlichungstag und Bekanntmachung des Hinweises auf die Entscheidung über den Einspruch: **27.01.2021**
(45) Hinweis auf die Patenterteilung: 04.05.2011
(21) Anmeldenummer: 07785984.1
(22) Anmeldetag: 11.07.2007
(51) Int. Cl.: B65D 81/32, B01F 15/02, B01F 5/10, B01F 15/06, A45D 44/00, G06Q 30/00

(54) **VERFAHREN UND SYSTEM ZUM HERSTELLEN EINES KOSMETISCHEN ARTIKELS**
METHOD AND SYSTEM FOR PRODUCING A COSMETIC ITEM
PROCÉDÉ ET SYSTÈME POUR LA PRODUCTION D'UN ARTICLE COSMÉTIQUE

(30) Priorität: 11.07.2006 DE 102006032316
(43) Veröffentlichungstag der Anmeldung: 25.03.2009
(73) Patentinhaber: Lecas, David, 72000 Le Mans (FR)
(72) Erfinder: EBELING, Hilde, 27383 Scheessel (DE)
(74) Vertreter: Träger, Denis
(86) Internationale Anmeldenummer: PCT/EP2007/006122
(87) Internationale Veröffentlichungsnummer: WO 2008/006553

(56) Entgegenhaltungen:
- EP-A- 0 839 736
- EP-A- 0 872 430
- FR-A- 2 876 356

## Beschreibung

Die Erfindung betrifft ein System zum Herstellen eines kosmetischen Artikels gemäß dem Oberbegriff des Anspruchs 1.

Die eingangs genannten kosmetischen Artikel, wie z.B. Cremes, Lotionen oder dergleichen, werden üblicherweise als fertige Produkte an den Endverbraucher verkauft. Der Vertrieb erfolgt in der Regel über Parfümerien, Drogeriemärkte, Warenhäuser oder ähnliche Verkaufsstellen. Die Herstellung der kosmetischen Artikel erfolgt in diesen Fällen entfernt vom Verkaufsort und dem Konsumenten in entsprechenden Fabriken. Da zwischen Herstellung und Verkauf der kosmetischen Artikel einige Zeit vergeht ist es üblich, den kosmetischen Artikeln Konservierungsstoffe beizumischen, um die Haltbarkeit zu verlängern. Daneben sind vereinzelt auch kosmetische Artikel ohne Konservierungsstoffe auf dem Markt mit entsprechend kürzerer Haltbarkeit.

Als Alternative zu der industriellen Herstellung von kosmetischen Artikeln besteht auch die Möglichkeit, derartige Artikel anhand von Rezepten selbst herzustellen. Die kosmetischen Inhaltsstoffe, aus dem der kosmetische Artikel im Wesentlichen hergestellt wird, können über spezielle Drogeriemärkte bezogen werden. Die Zubereitung erfolgt dann anhand eines Rezeptes vor Ort beim Endkunden. Ein Nachteil dieser Lösung besteht inder stets erforderlichen Dosierung der Inhaltsstoffe.

Aus der DE 20 2004 011 856 U1 ist ferner eine Vorrichtung zum Herstellen eines Pflegemittels bekannt, bei der kosmetische Produkte in Vorratskartuschen bereitgehalten werden. Aus diesen Vorratskartuschen werden die Produkte bei Bedarf portionsweise mittels einer Regulierungseinrichtung entnommen und in einer Mischeinrichtung vermengt. Eine ähnliche Lösung sieht die DE 41 10 299 C1 vor. Ein Nachteil dieser Lösungen ist darin zu sehen, dass die kosmetischen Produkte in den Vorratskartuschen gelagert werden und somit entweder Konservierungsstoffe beinhalten oder nur eine eingeschränkte Haltbarkeit aufweisen.

Bekannt ist weiterhin aus der US 1,282,485 eine Verpackung für kosmetische Produkte. Die Verpackung besteht aus einem Unterteil, das mehrere muldenartige Vertiefungen zur Aufnahme von Kosmetikprodukten aufweist. Diese Mulden werden oberseitig durch einen drehbar auf dem Unterteil gelagerten Deckel verschlossen. Der Deckel verfügt über eine Öffnung, deren Abmessungen in etwa denen der Mulden entsprechen. Durch Drehen des Deckels kann die Öffnung über einer der Mulden platziert werden, sodass das benötigte Produkt nach Bedarf entnommen werden kann. Auch diese Lösung weist den Nachteil auf, dass die verbrauchsbereiten kosmetischen Produkte, die in den Mulden gelagert werden entweder Konservierungsstoffe beinhalten müssen oder nur eine eingeschränkte Haltbarkeit aufweisen.

Aus der EP 0 872 430 A1, die ein System gemäß dem Oberbegriff des Anspruchs 1 aufweist, ist ein thermoplastisches Behältnis mit wenigstens zwei unterschiedliche Produkte enthaltenden Kammern bekannt. Dabei ist eine erste Kammer randseitig gelenkig mit einer zweiten Kammer derart verbunden, dass das Produkt in der ersten Kammer durch Verschwenken der ersten Kammer in die zweite Kammer schüttbar ist, um dort mit dem zweiten Produkt manuell vermischt zu werden.

Die EP 0 839 736 A1 offenbart ein Behältnis zum Vermischen von zwei Produkten, wobei wenigstens ein Produkt in einem innerhalb des ersten Behältnisses angeordneten, herausnehmbaren zweiten Behältnis befindlich ist, sodass die Produkte in dem ersten Behältnis zusammengeschüttet und manuell vermischt werden können.

Die FR 2876356 A betrifft ein Behältnis mit zwei getrennten Kammern für zwei zu vermischende Produkte, wobei ein schlauchförmiger Kanal die beiden Kammern miteinander verbindet, sobald die gelenkig aufeinander geklappten Kammern auseinander geklappt werden, sodass die Produkte manuell vermischt werden können.

Hiervon ausgehend liegt der Erfindung die Aufgabe zugrunde, ein neues System gemäß Anspruch 1 zur Herstellung von kosmetischen Artikeln vorzuschlagen.

Erfindungsgemäß wird die Aufgabe durch ein System mit den Merkmalen des Anspruchs 1 gelöst.

Vorzugsweise enthält eine Kapsel alle Inhaltsstoffe zur Herstellung des Artikels. Auf diese Weise ist die Herstellung des kosmetischen Artikels für den Endverbraucher sehr einfach.

Vorzugsweise ist vorgesehen, dass die Vorrichtung wenigstens eine Heiz- und/oder Kühleinrichtung, eine Homogenisierungseinrichtung und wenigstens einige Organe der Vorrichtung verbindende Zirkulationsleitung sowie eine entsprechende Pumpe aufweist.

Weitere bevorzugte Weiterbildungen der Vorrichtung sind der Beschreibung sowie den Zeichnungen zu entnehmen.

Bevorzugte Ausführungsbeispiele der Erfindung werden nachfolgend anhand der Zeichnung beschrieben. In dieser zeigt:
- Fig. 1: eine schematische Darstellung einer Vorrichtung zur Herstellung von kosmetischen Artikeln aus vorbemessenen kosmetischen Inhaltsstoffen,
- Fig.2: eine alternative Vorrichtung zum vorhergehend genannte Zweck in schematischer Darstellung,
- Fig. 3: eine vergrößerte Darstellung eines Teils der Vorrichtung gemäß Fig. 1 und 2 in einem schematischen Schnitt,
- Fig. 4: eine schematische Darstellung der Herstellung eines kosmetischen Artikels während verschiedener Phasen des Herstellvorgangs,
- Fig. 5: eine Verpackungseinheit für vorbemessene kosmetische Inhaltsstoffe in einer schematischen Schnittdarstellung,
- Fig. 6: eine schematische Darstellung der Herstellung eines kosmetischen Artikels mit einer Verpackungseinheit gemäß Fig. 5 während verschiedener Phasen des Herstellvorgangs,
- Fig. 7: einen schematischen Vertikalschnitt durch eine Verpackungseinheit gemäß Fig. 5 und 6 sowie
- Fig. 8: einen schematischen Horizontalschnitt durch eine Verpackungseinheit gemäß Fig. 5 bis 7.

Die in den Figuren gezeigte Erfindung besteht im Kern darin, dass mittels einer speziellen Vorrichtung kosmetische Artikel wie beispielsweise Cremes, Lotionen, Shampoos oder dergleichen vor Ort durch den Endverbraucher in kleinen haushaltsüblichen Mengen hergestellt werden.

### Hierzu im Einzelnen:

Der Grundgedanke der vorliegenden Erfindung besteht darin, dass die kosmetischen Inhaltsstoffe zur Herstellung des kosmetischen Artikels in exakt vorbemessenen Mengen dem Endverbraucher zur Verfügung gestellt werden. Der Endverbraucher kann vorzugsweise mit Hilfe der nachfolgend beschriebenen Vorrichtung eine haushaltsübliche Menge des kosmetischen Artikels herstellen, ohne dass er sich um eine Portionierung bzw. um ein Abmessen der kosmetischen Inhaltsstoffe kümmern muss.

Die hier in Rede stehenden kosmetischen Artikel können beispielsweise aus einer Wasser-Phase und einer Fett-Phase bestehen. Die Wasser-Phase wird in der Regel auf eine bestimmte Temperatur erhitzt und mit der Fett-Phase dispergiert. Gegebenenfalls kann dieser Prozess auch umgekehrt werden. Nach Mischung der Wasser-Phase mit der Fett-Phase wird nachfolgend eine Emulsion hergestellt. Hierfür existieren verschiedene Möglichkeiten auf die im Nachfolgenden noch eingegangen wird. Nach der Herstellung der Emulsion wird diese abgekühlt und weitere kosmetische Inhaltsstoffe zugegeben. Die Zugabe der weiteren kosmetischen Inhaltsstoffe kann je nach herzustellendem kosmetischem Artikel bei verschiedenen Temperaturen erfolgen.

Die Erfindung ist aber nicht auf die Anwendung bei der Herstellung von Artikeln aus Emulsionen beschränkt. Beispielsweise werden bei der Herstellung von Gelen wie Haargel oder Duschgel lediglich eine Fest-Phase (Pulver) in eine Wasser-Phase dispergiert. Auch derartige Produkte können erfindungsgemäß hergestellt werden.

Eine Besonderheit besteht dabei darin, dass die kosmetischen Inhaltsstoffe die zur Herstellung des kosmetischen Artikels benötigt werden derart zur Verfügung gestellt werden, dass insgesamt kein Abwiegen oder Abmessen der kosmetischen Inhaltsstoffe erforderlich ist. Hierzu werden nachfolgend Verpackungs- bzw. Verkaufseinheiten in Form von Kapseln vorgeschlagen, auf die noch eingegangen wird.

Ein Vorteil des beschriebenen Herstellungsverfahrens besteht darin, dass durch die Herstellung vor Ort beim Endkunden keine Konservierungsstoffe zugegeben werden müssen. Zudem wird ein weiterer Vorteil darin gesehen, dass zusammen mit der speziellen Vorrichtung und den speziellen vorbemessenen kosmetischen Inhaltsstoffen auch Rezepte an den Endverbraucher verkauft werden können. Durch Entwicklung von neuen Rezepten wird die Anzahl der herstellbaren kosmetischen Artikel erweitert. Zudem ergibt sich neben dem Verkauf der Vorrichtung und der kosmetischen Inhaltsstoffe hierdurch eine weitere Einnahmequelle.

Ein weiterer Vorteil der Erfindung wird darin gesehen, dass der Endverbraucher auch direkten Einfluss auf die Zusammensetzung des herzustellenden kosmetischen Artikels nehmen kann. Der Endverbraucher kann daher den kosmetischen Artikel beispielsweise an persönliche Vorlieben oder persönliche Bedürfnisse anpassen. Denkbar ist beispielsweise die Herstellung einer Hautcreme, die an den Hauttyp des Endverbrauchers angepasst ist oder ein Shampoo, das an den Haartyp des Endverbrauchers angepasst ist. Denkbar ist beispielsweise auch die Möglichkeit der individuellen Zugabe von Duft-, Farbstoffen oder sonstigen Zusatzstoffen jeweils nach Geschmack des Endverbrauchers.

Die Herstellung der Emulsion, also das Vermischen der Wasser-Phase mit der Fett-Phase, kann auf verschiedenen Wegen erfolgen:
1. (Hochdruck-)Homogenisierung,
2. Homogenisierung nach dem Rotor-/Stator-Prinzip,
3. Homogenisierung nach dem Ultraschall-Prinzip,
4. Homogenisierung durch eine Rührvorrichtung, und
5. herkömmliches Mischen und Rühren.

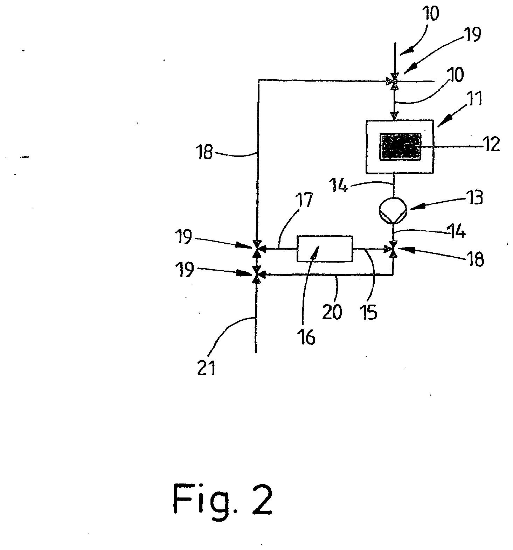

Das grundsätzliche Herstellungsverfahren und damit implizit auch der grundsätzliche Aufbau einer geeigneten Vorrichtung ergeben sich aus der nachfolgenden Beschreibung in Verbindung mit Fig. 2. Über eine Zufuhrleitung 10 wird erhitztes Wasser in eine Kammer 11 geleitet. In der Kammer 11 befinden sich die kosmetischen Inhaltsstoffe 12, die für die Herstellung des kosmetischen Artikels benötigt werden. Durch das erhitzte Wasser in der Kammer 11 werden die kosmetischen Inhaltsstoffe 12 auf eine vorgegebene Temperatur erhitzt. Danach werden die kosmetischen Inhaltsstoffe 12 mit dem Wasser vermischt. Die so entstandene Mixtur wird mittels einer Pumpe 13 über weitere Leitungen 14 und 15 an eine Homogenisierungseinrichtung 16 weitergeleitet in der die Emulsion erzeugt wird. Von der Homogenisierungseinrichtung 16 kann die Mischung über weitere Leitungen 17, 18 wieder zurück in die Kammer 11 geleitet werden, so dass die Mischung das System zyklisch durchläuft bis die gewünschte Produktqualität sich eingestellt hat.

Nachdem die gewünschte Produktqualität erreicht ist, kann der kosmetische Artikel mittels der Pumpe 13 noch solange im Kreis durch das System bewegt werden, bis die Mischung sich abgekühlt hat. Danach können weitere Inhaltsstoffe in der Kammer 11 zugeführt werden.

Um das Wasser zu erhitzten, kann der Zufuhrleitung 10 eine Erhitzungseinrichtung vorgeordnet sein. Um den Materialfluss in den Leitungen steuern zu können, sind in den Knotenpunkten der Leitungen jeweils Ventile 19 vorgesehen. Nach Fertigstellung des kosmetischen Artikels wird dieser über die Leitung 20 und 21 ausgefördert.

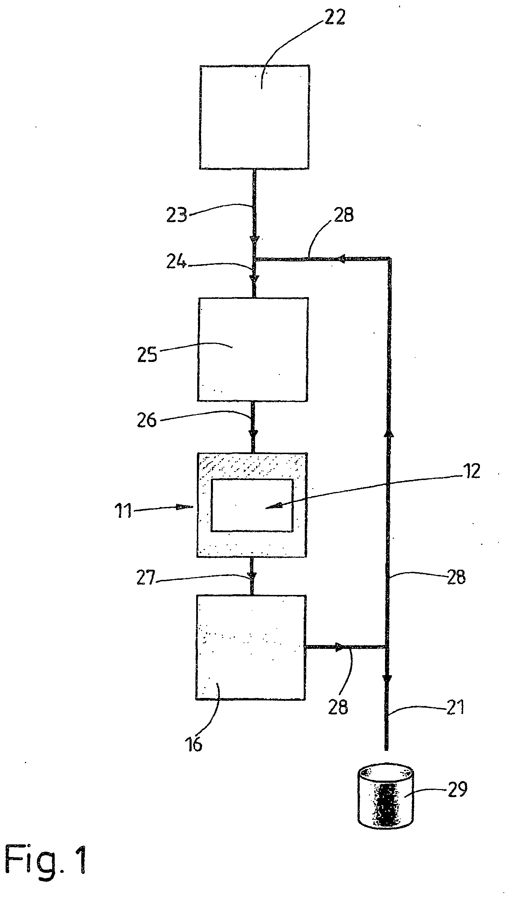

Eine weitere alternative Vorrichtung und ein entsprechendes Verfahren sind in Fig. 1 dargestellt:
Über einen separaten Wassertank 22 wird Wasser über Leitungen 23, 24 einer Heiz- und/oder Kühleinrichtung 25 zugeführt. Von dort gelangt das geheizte oder gekühlte Wasser über eine weitere Leitung 26 zur Kammer 11 in der sich zu Beginn des Herstellungsprozesses die kosmetischen Inhaltsstoffe 12 befinden. Über eine weitere Leitung 27 wird danach eine Homogenisierungseinrichtung 16 an die Kammer 11 angeschlossen. Aus der Homogenisierungseinrichtung 16 kann das Produkt entweder über Zirkulationsleitungen 28 wieder zur Heiz- und/oder Kühleinrichtung 25 zirkuliert werden. Alternativ kann der fertige Artikel über eine Leitung 21 einem Behälter 29 zugeführt werden.

Beide Vorrichtungen arbeiten im Wesentlichen übereinstimmend. Bei der Lösung gemäß Fig. 1 wird zunächst Wasser einer bestimmten Menge aus dem Wassertank 22 entnommen und in der Einrichtung 25 zunächst auf eine für die Herstellung des kosmetischen Artikels ausreichende Temperatur erhitzt. Nachfolgend wird das erhitzte Wasser in die Kammer 11 gepumpt und dort mit den kosmetischen Inhaltsstoffen 12 vermischt. Nachfolgend wird die so erzeugte Mischung in der Homogenisierungseinrichtung 16 bearbeitet. Dieser Vorgang wird so oft wiederholt, bis der kosmetische Artikel fertiggestellt ist. Danach wird der Artikel über die Leitung 21 in den Behälter 29 gefördert und kann durch den Endverbraucher benutzt werden.

Eine weitere bevorzugte Lösung sieht vor, dass das benötigte Wasser oder eine entsprechende andere Flüssigkeit nicht aus einem separaten Wassertank stammt, sondern bereits in der Verpackungseinheit neben den übrigen Inhaltsstoffen enthalten ist.

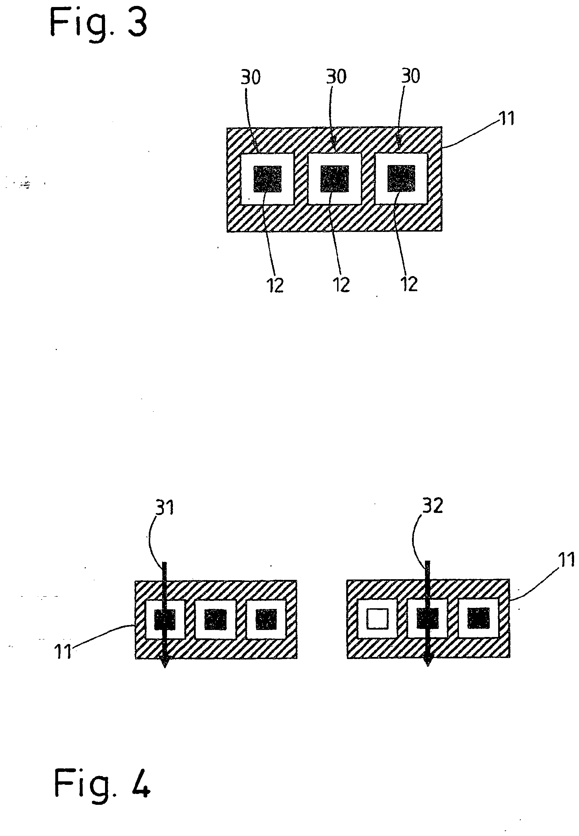

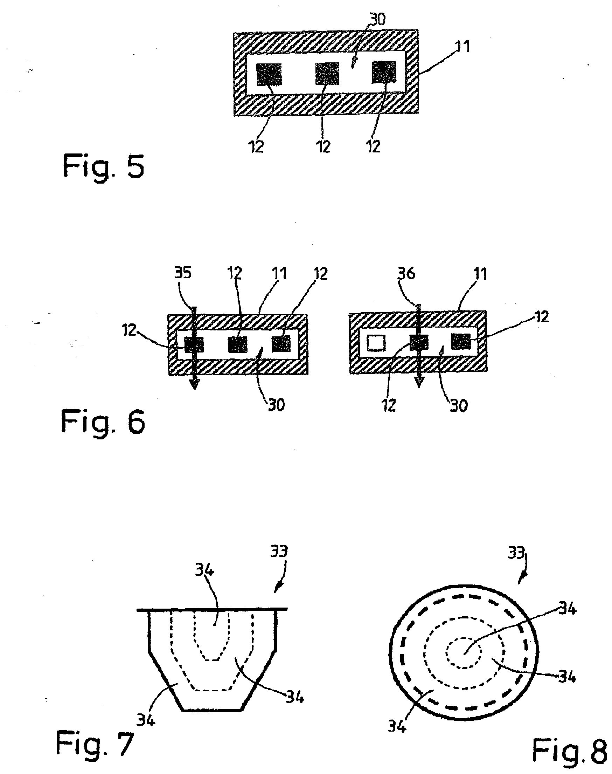

Eine weitere Besonderheit der Erfindung ergibt sich aus den Fig. 3 und 4 einerseits sowie den Fig. 5 - 7 andererseits. Hierzu im Einzelnen:
Sofern der kosmetische Artikel aus mehreren kosmetischen Inhaltsstoffen 12 hergestellt wird, ist es erforderlich, dass diese in der Regel nacheinander miteinander vermischt werden. Dies kann während verschiedener Phasen der Herstellung des kosmetischen Artikels erfolgen. Um derartige kosmetische Artikel möglichst einfach herstellen zu können, wird gemäß Fig. 3 und 4 eine Kammer 11 mit mehreren Aufnahmeräumen für verschiedene kosmetische Inhaltsstoffe 12 vorgeschlagen. Fig. 5 und 7 zeigen eine zusätzliche oder alternative Variante, bei der die verschiedenen kosmetischen Inhaltsstoffe 12 in einer gemeinsamen Verpackungseinheit, nämlich einer Kapsel 33, getrennt voneinander eingeschlossen sind. Mit beiden Lösungen wird gewährleistet, dass die kosmetischen Inhaltsstoffe 12 nach den Anforderungen des Rezepts dem Herstellungsprozess unabhängig voneinander zugeführt werden können. Bei den Inhaltsstoffen handelt es sich dabei vorzugsweise um unvermischte Rohstoffe.

Bei der Lösung gemäß Fig. 3 und 4 weist die Kammer drei Aufnahmeräume 30 auf, in denen jeweils wenigstens ein kosmetischer Inhaltsstoff 12 eingebracht werden kann. Vorzugsweise ist jeder kosmetische Inhaltsstoff 12 in eine Verpackungseinheit eingehüllt, beispielsweise in eine Kapsel 33 oder dergleichen. Auf diese Weise kann der kosmetische Inhaltsstoff 12 zunächst durch das aufgeheizte Wasser erwärmt werden, bevor er mit diesem oder einem anderen Gemisch vermengt wird. Zu diesem Zweck wird dann die jeweilige Kapsel 33 bzw. Verpackungseinheit geöffnet, so dass der kosmetische Inhaltsstoff 12 freigegeben wird. Es findet dann die Vermengung statt. Zu einem späteren Zeitpunkt können dann eine oder mehrere andere Kapseln 33 geöffnet und mit der Mischung vermengt werden.

Z.B. kann wie in Fig. 4 gezeigt in einem ersten Schritt die Wasser-Phase vorbereitet werden, nämlich durch Mischung des entsprechenden kosmetischen Inhaltsstoffs 12 mit einer bestimmten Menge von Wasser. Dieser Vorgang ist in Fig. 4 in der linken Abbildung durch den Pfeil 31 angedeutet. Nachfolgend kann die Mischung homogenisiert werden und gegebenenfalls durch die Heizeinrichtung 25 aufgeheizt werden. Um die Kapsel 33 mit den kosmetischen Inhaltsstoffen 12 für die Wasser-Phase in der Kammer 11 zu öffnen, kann diese einem Wasser-Überdruck ausgesetzt werden oder durch mechanische Beanspruchung geöffnet werden, wie beispielsweise durch Aufbohren der Kapsel, Schmelzen der Kapsel oder Zerstören der Kapsel durch ein Vakuum.

In einem zweiten Schritt könnte dann die Wasser-Phase in der Fett-Phase dispergiert werden, zur Herstellung einer Emulsion, sofern dies beidem jeweiligen herzustellenden Artikel erforderlich ist. Zu diesem Zweck würde dann die zweite Kapsel 33 mit den kosmetischen Inhaltsstoffen 12 für die Fett-Phase in der Kammer 11 geöffnet, wie dies Fig. 4 in der rechten Darstellung durch den Pfeil 32 angedeutet ist. Die zweite Kapsel 33 für die Fett-Phase könnte auf die oben beschriebene Weise geöffnet werden, so dass die entsprechenden kosmetischen Inhaltsstoffe 12 zur Wasser-Phase hinzugefügt werden. Hieraus könnte dann eine Emulsion hergestellt werden, indem die beiden miteinander vermischten Phasen in der Vorrichtung zirkuliert werden. Alternativ können bei einer Kapsel die alle Inhaltsstoffe in separaten Aufnahmeräumen enthält die einzelnen Aufnahmeräume nacheinander geöffnet werden, so dass die Inhaltsstoffe in der benötigten Reihenfolge gemischt werden können.

Das Befüllen der einzelnen Aufnahmeräume 30 mit den die kosmetischen Inhaltsstoffe 12 enthaltenen Kapseln 33 kann durch den Endverbraucher erfolgen. Alternativ oder zusätzlich kann die Vorrichtung zur Herstellung auch bereits durch den Verkäufer bei der Erstauslieferung mit Kapseln 33 bestückt werden. Denkbar ist auch ein der Vorrichtung zugeordnetes Magazin für verschiedene Kapseln 33, wodurch ein Vorrat an Inhaltsstoffen bereitgehalten wird. Die Auswahl der einzelnen Kapseln 33 kann anhand eines Rezepts oder gegebenenfalls bei entsprechender Programmierung der Vorrichtung auch automatisch erfolgen, indem ein bestimmter herzustellender Artikel an der Vorrichtung ausgewählt wird. Der Vorteil der erfindungsgemäßen Lösung liegt klar auf der Hand: Der Endverbraucher muss die einzelnen kosmetischen Inhaltsstoffe nicht einzeln abwiegen oder abmessen, sondern lediglich die erforderlichen Kapseln 33 in die Vorrichtung geben und diese aktivieren. Bei entsprechender Programmierung der Vorrichtung kann diese sich auch die erforderliche Menge Wasser aus dem Wassertank 22 oder der Zufuhrleitung 10 ziehen. Der Endkunde erhält damit auf Knopfdruck einen frisch zubereiteten kosmetischen Artikel seiner Wahl, der keine Konservierungsstoffe aufweisen muss, da die kosmetischen Inhaltsstoffe 12 in den Kapseln 33 lagerfähig versiegelt sein können und die hergestellte Menge des kosmetischen Artikels sich innerhalb entsprechender Zeit aufbrauchen lässt.

Vorzugsweise kommt jedoch lediglich eine einzige Kapsel zum Einsatz die alle erforderlichen Inhaltsstoffe enthält und die zur Herstellung der haushaltsüblichen Menge komplett entleert wird.

Fig. 5 - 8 zeigen eine bevorzugte Variante der Kammer 11 mit mehreren Aufnahmeräumen 30 gemäß Fig. 3 und 4. In diesem Fall weist die Kammer 11 lediglich einen Aufnahmeraum 30 auf. In diesem Aufnahmeraum 30 werden die vorbemessenen kosmetischen Inhaltsstoffe 12 getrennt voneinander aktiviert. Im vorliegenden Fall erfolgt dies durch die Zuführung der kosmetischen Inhaltsstoffe 12 in einer gemeinsamen Kapsel 33 mit mehreren Aufnahmeräumen 34. Die einzelnen Aufnahmeräume 34 sind voneinander getrennt, beispielsweise durch Wandungen der Kapsel 33. Die Kapsel 33 wird in die Kammer 11 der Vorrichtung eingeführt und die einzelnen Phasen nacheinander freigesetzt, wie dies durch die Pfeile 35 und 36 inFig. 6 analog zur Darstellung in Fig. 5 dargestellt ist. Auf diese Weise können die einzelnen Phasen nacheinander miteinander vermischt werden, wie vorstehend beschrieben.

Grundsätzlich ist es natürlich auch denkbar, dass mehrere der in Fig. 7 und 8 gezeigten Kapseln 33 in eine Vorrichtung gemäß Fig. 3 eingesetzt werden, bei der die Kammer 11 mehrere Aufnahmeräume 30 für jeweils eine Kapsel 33 aufweist.

Vorzugsweise enthält die in Fig. 7 und 8 gezeigte Kapsel 33 alle kosmetischen Inhaltsstoffe 12, die zur Herstellung des kosmetischen Artikels erforderlich sind.

Die Vorrichtung zur Herstellung des kosmetischen Artikels sollte im Wesentlichen über folgende Funktionen verfügen:
1. Erhitzen,
2. Mischen/Homogenisieren,
3. Kühlen,
4. Entladen,
5. Reinigen.

Die Heizeinrichtung 25 dient zum Erhitzen des Wassers und gleichfalls von eventuell benötigten zusätzlichem Öl. Weiterhin kann die Heizeinrichtung 25 eingesetzt werden, um während des Herstellungsprozesses entsprechend des Rezeptes einzelne Zwischenprodukte bzw. Mischungen verschiedener Phasen zu erhitzen.

Gemischt bzw. homogenisiert müssen die einzelnen Phasen der kosmetischen Inhaltsstoffe 12 werden. Entsprechendes gilt für das Lösen bzw. Emulgieren sofern erforderlich. Zu diesem Zweck kann die Vorrichtung dann auch über entsprechende Funktionen verfügen. Es versteht sich, dass die erfndungsgemäße Vorrichtung nicht alle Funktionen aufweisen muss. Beispielsweise können einzelne Organe zur Verwirklichung bestimmter Funktionen fehlen, sofern der jeweilige Einsatzzweck bzw. die herzustellenden Produkte diese nicht erfordern. Denkbar ist natürlich auch, dass die Vorrichtung einen gewissen Funktionsüberschuss aufweist. Bei der Herstellung der Artikel werden dann regelmäßig nicht alle Funktionen benötigt. Die Vorrichtung verfügt dann aber über zusätzliche Funktionen, mit denen Spezialprodukte hergestellt werden können.

Hinsichtlich des Kühlens der einzelnen Phasen bzw. Mischungen daraus kann die Kühleinrichtung 25 zum Einsatz kommen. Alternativ kann das zu kühlende Material bzw. deren Mischung solange im Gerät zirkuliert werden, bis es von selbst abkühlt.

Das Entladen des kosmetischen Artikels kann direkt in einen vom Endkunden zur Verfügung gestellten Behälter erfolgen. Vorzugsweise erfolgt das Abfüllen unter Überdruck, beispielsweise mit einer Pumpe oder auf mechanischem Wege.

Zur Reinigung der Vorrichtung können spezielle Reinigungs-Kapseln in das Gerät eingesetzt werden, die eine Reinigung oder Desinfektion und/oder Sterilisation der einzelnen Organe der Vorrichtung ermöglichen.

Ein weiterer Aspekt besteht in einem besonderen Geschäftsmodell. Der Endkunde kann bzw. muss zunächst eine geeignete Vorrichtung zur Herstellung der kosmetischen Artikel erwerben. Er kann weiter zur Herstellung der Artikel die vorbemessenen kosmetischen Inhaltsstoffe 12 erwerben. Weiterhin kann der Endverbraucher die benötigten Rezepte erwerben. Vorzugsweise erfolgt der Verkauf dieser Artikel in Form einer kompletten Erstausstattung sowie in Form von Ersatz- und Nachlieferungsartikeln. Die Belieferung des Endverbrauchers kann ohne Zwischenhändler direkt vom Hersteller erfolgen. Denkbar ist beispielsweise ein Online-Shop in dem der Kunde einzelne kosmetische Inhaltsstoffe beziehen kann. Denkbar ist auch, dass der Kunde den herzustellenden Artikel auswählt und im Online-Shop dann eine Einkaufsliste mit den benötigten kosmetischen Inhaltsstoffen generiert wird. Diese werden dann zur Auslieferung an den Endkunden gebracht, der dann daraufhin zu Hause den kosmetischen Artikel herstellen kann.

Vorzugsweise ist ferner vorgesehen, dass jeder Kunde eigene Rezepturen im Online-Shop "speichern" und für Nachbestellungen abrufen kann. Auf diese Weise kann jeder Kunde seine eigenen Produkte kreieren und nachbestellen.

Es versteht sich, dass es sich bei der vorstehend beschriebenen Vorrichtung und den Kapseln lediglich um Ausführungsbeispiele der Erfindung handelt. Insofern dienen diese lediglich zur Erläuterung der Erfindung und verstehen sich als nicht beschränkende Ausführungsbeispiele der Erfindung.

Es versteht sich, dass sowohl nach dem beschriebenen Verfahren als auch mit der beschriebenen Vorrichtung auch andere Artikel herstellbar sind. Denkbar sind z.B. pharmazeutische Artikel, Lebensmittel oder dergleichen. Es werden dann natürlich andere Inhaltsstoffe zum Einsatz kommen und eventuell angepasste Verfahrensschritte erforderlich sein, um das jeweilige Produkt herstellen zu können. Im Kern werden aber auch bei anderen Produkten stets vorbemessene Einheiten der Inhaltsstoffe zum Einsatz kommen. Die vorstehenden Ausführungsbeispiele sind somit analog auch für die Herstellung alternativer Artikel gültig.

Des Weiteren können die Verpackungseinheiten auch wieder verwendbar sein. Denkbar ist beispielsweise eine Rücksendung an den Hersteller bzw. Verkäufer zum direkten erneuten Auffüllen, oder im Rahmen eines Pfandsystems.

### Bezugszeichenliste

- 10: Zufuhrleitung
- 11: Kammer
- 12: kosmetischer Inhaltsstoff
- 13: Pumpe
- 14: Leitung
- 15: Leitung
- 16: Homogenisierungseinrichtung
- 17: Leitung
- 18: Leitung
- 19: Ventil
- 20: Leitung
- 21: Leitung
- 22: Wassertank
- 23: Leitung
- 24: Leitung
- 25: Heinz- und/oder Kühleinrichtung
- 26: Leitung
- 27: Leitung
- 28: Zirkulationsleitung
- 29: Behälter
- 30: Aufnahmeraum
- 31: Pfeil
- 32: Pfeil
- 33: Kapsel
- 34: Aufnahmeraum
- 35: Pfeil
- 36: Pfeil

## Patentansprüche

1. System mit einer Vorrichtung zum Herstellen von kosmetischen Artikeln und wenigstens einer Verpackungseinheit, wobei die Verpackungseinheit, insbesondere eine Kapsel (33), zur Herstellung von kosmetischen Artikeln eine Außenumhüllung und vorzugsweise mehrere voneinander durch Wandungen der Verpackungseinheit getrennte Aufnahmeräume (34) aufweist, wobei in dem oder jedem Aufnahmeraum (34) eine vorbemessene Menge wenigstens eines kosmetischen Inhaltsstoffes (12) enthalten ist zur Herstellung eines kosmetischen Produkts durch einen Endverbraucher und wobei die in der Verpackungseinheit enthaltenen Inhaltsstoffe (12) exakt zur Herstellung einer haushaltsüblichen Menge eines kosmetischen Produkts bemessen sind und die in der wenigstens einen Verpackungseinheit enthaltenen vorbemessenen kosmetischen Inhaltsstoffe (12) in einer Kammer vermischbar sind zur Herstellung exakt einer haushaltsüblichen Menge des kosmetischen Artikels, **dadurch gekennzeichnet, dass** die Vorrichtung eine (Misch-) Kammer zur Aufnahme wenigstens eine der Verpackungseinheit aufweist.

2. System nach Anspruch 1, mit einer Heiz- und/oder Kühleinrichtung (25) einer Homogenisierungseinrichtung (16) und wenigstens einige Organe der Vorrichtung verbindenden Zirkulationsleitungen sowie einer entsprechenden Pumpe (13).

3. System nach Anspruch 1 oder 2, **dadurch gekennzeichnet, dass** ein der Vorrichtung zugeordnetes Magazin für verschiedene Kapseln (33) vorgesehen ist, wodurch ein Vorrat an Inhaltsstoffen bereitgehalten wird, wobei die Auswahl der einzelnen Kapseln (33) anhand eines Rezepts oder gegebenenfalls bei entsprechender Programmierung der Vorrichtung auch automatisch erfolgt, indem ein bestimmter herzustellender Artikel an der Vorrichtung auswählbar ist.

4. System nach einem der Ansprüche 1 bis 3, **dadurch gekennzeichnet, dass** eine der Kapseln alle Inhaltsstoffe zur Herstellung des Materials enthält, und/oder dass lediglich eine einzige der Kapseln bei der Herstellung einer haushaltsüblichen Menge des kosmetischen Produkts zum Einsatz kommt, die alle erforderlichen Inhaltsstoffe enthält und die zur Herstellung der haushaltsüblichen Menge komplett entleerbar ist.

## Claims

1. A system for producing cosmetic items and at least one packing unit, with the packing unit, in particular a capsule (33), having for the production of cosmetic items an outer wrapping and preferably a plurality of receiving spaces (34) separated from one another by walls of the packing unit, with a pre-measured quantity of at least one cosmetic ingredient (12) being contained in the or each receiving space (34) in order for a final consumer to produce a cosmetic product and with the ingredients (12) contained in the packing unit being measured precisely in order to produce a domestic quantity of a cosmetic product and the pre-measured cosmetic ingredients (12) contained in the at least one packing unit can be mixed in a chamber in order to produce precisely one domestic quantity of the cosmetic item, **characterized in that** the device has a (mixing) chamber for receiving at least one packing unit.

2. The system as claimed in claim 1, with a heating and/or cooling device (25), a homogenizing device (16) and circulation lines connecting at least some elements of the device, and a corresponding pump (13).

3. The system as claimed in claim 1 or 2, **characterized in that** a magazine which is assigned to the device and is intended for different capsules 33 is provided, by means of which a stock of ingredients is kept ready, the individual capsules 33 also being selected automatically with reference to a recipe or, if appropriate, with corresponding programming of the device, it being possible to select a certain item to be produced at the device.

4. The system as claimed in one of the claims 1 to 3, **characterized in that** one of the capsules contains all ingredients for producing the material, and/or that only a single one of capsules is utilized in the production of a domestic quantity of the cosmetic product, it being possible for said capsule, which contains all necessary ingredients, to be completely emptied for the production of the domestic quantity.

## Revendications

1. Système avec un dispositif pour la production d'articles cosmétiques et au moins une unité de conditionnement, l'unité de conditionnement, notamment une capsule (33) comportant, pour produire des articles cosmétiques, une enveloppe extérieure et de préférence plusieurs espaces de logement (34) séparés les uns des autres par les parois de l'unité de conditionnement, une quantité préalablement mesurée d'au moins un composant cosmétique (12) étant contenue dans le ou les espaces de logement (34) pour permettre à un consommateur final de produire un produit cosmétique et les composants (12) contenus dans l'unité de conditionnement étant mesurés avec exactitude pour produire une quantité de produit cosmétique correspondant aux habitudes d'un foyer et les composants cosmétiques (12) préalablement mesurés contenus dans l'au moins une unité de conditionnement pouvant être mélangés dans un compartiment pour produire exactement une quantité d'article cosmétique correspondant aux habitudes d'un foyer, **caractérisé en ce que** le dispositif comporte un compartiment (de mélange) pour loger au moins une des unités de conditionnement.

2. Système selon la revendication 1, avec un dispositif de chauffage et/ou de refroidissement (25), un dispositif d'homogénéisation (16) et des conduites de circulation reliant au moins quelques organes du dispositif ainsi qu'une pompe (13) correspondante.

3. Système selon la revendication 1 ou 2, **caractérisé en ce qu' un** des dispositifs est pourvu d'un espace de stockage associé pour différentes capsules (33), permettant de maintenir à disposition une réserve de composants, la sélection des différentes capsules (33) se faisant à l'aide d'une recette ou le cas échéant de façon automatique par programmation correspondante du dispositif, du fait qu'il est possible de sélectionner l'article défini à produire au niveau du dispositif.

4. Système selon l'une quelconque des revendications 1 à 3, **caractérisé en ce qu'** une des capsules contient tous les composants pour produire la matière et ou que seule une des capsules n'est utilisée pour la production d'une quantité de produit cosmétique correspondant aux habitudes d'un foyer qui contient tous les composants nécessaires, lesdites capsules pouvant être entièrement vidées pour produire la quantité correspondant aux habitudes d'un foyer.
